# DEMANDE DE BREVET EUROPEEN

(11) **EP 1 524 072 A1**
(43) Date de publication de la demande: **20.04.2005**
(21) Numéro de dépôt: 03405741.4
(22) Date de dépôt: 15.10.2003
(51) Int. Cl.: B24B 3/02, B24B 49/02, B24B 55/00

(54) **Machine à rectifier**

(71) Demandeur: F. Pizzi succ. Anna Pizzi, 2400 Le Locle (CH)
(72) Inventeur: Favre, Charles-André, 2300 La Chaux-de-Fonds (CH)
(74) Mandataire: Gresset, Jean

(57) **Abrégé**

Machine à rectifier comportant un dispositif de commande (39), un châssis (18) et, montés sur ce châssis, des organes comprenant :
- un support muni de moyens de fixation destinés à porter une pièce à rectifier (34), et
- un groupe d'usinage (20) comprenant une tête (26), un organe de serrage (26a) monté sur la tête et destiné à porter une meule (30), et un dispositif d'entraînement (26b) destiné à faire tourner la meule autour d'un premier axe de rotation (B-B), pour assurer la rectification de la pièce (34).

Cette machine se caractérise en ce qu'elle comporte notamment :
- un équipement de métrologie (42) destiné à mesurer la pièce (34), et
- un dispositif de nettoyage (40) comportant une chambre (43) et agencé de manière à permettre l'engagement, dans cette chambre, de la pièce (34) portée par son support.

## Description

La présente invention se rapporte aux machines à rectifier qui, par meulage et avec une très grande précision, permettent d'assurer la finition de pièces généralement en métal ou en matériau dur, et notamment des machines à tailler des fraises.

De telles machines comportent généralement un dispositif de commande et un châssis sur lequel sont montés :
- un support muni de moyens de fixation destinés à porter une pièce à rectifier, et
- un groupe d'usinage comprenant une tête, un organe de serrage destiné à porter une meule et un organe d'entraînement destiné à faire tourner la meule.

La précision à obtenir, qui est de l'ordre du millième de millimètre, ne peut l'être que dans la mesure où chaque partie de la machine est elle-même très précise. Un des points les plus délicats se rapporte à la mise en place et au serrage de la pièce à rectifier sur son support. C'est pourquoi il est indispensable de commencer par faire un étalonnage permettant de prendre en compte la position relative de la pièce et de la meule, avant d'entreprendre la rectification.

A cause des différents paramètres variables, il est possible que la précision espérée ne soit pas atteinte. La pièce doit donc être contrôlée et mesurée. Pour effectuer cette mesure avec la précision voulue, il est nécessaire que la pièce soit propre et à la température ambiante. Elle est donc enlevée de son support, nettoyée dans une machine éliminant toutes les impuretés que sa surface pourrait comporter, et plus particulièrement du liquide de lubrification et de refroidissement utilisé lors de l'usinage et des particules abrasives, puis mesurée lorsqu'elle a atteint la température ambiante.

Si la pièce est enlevée de son support, et qu'elle n'est pas dans les tolérances, il est donc nécessaire de recommencer l'opération, sans être certain d'obtenir le résultat souhaité.

Le but de la présente invention est de permettre une mesure de la pièce rectifiée sans qu'il soit nécessaire de l'enlever de son support. A cet effet, la machine selon l'invention comporte un dispositif de commande, un châssis et, montés sur ce châssis, des organes comprenant :
- un support muni de moyens de fixation destinés à porter une pièce à rectifier, et
- un groupe d'usinage comprenant une tête munie d'un dispositif de serrage destiné à porter une meule et d'un dispositif d'entraînement destiné à faire tourner la meule autour d'un premier axe de rotation, pour assurer la rectification de la pièce.

Le dispositif de commande est agencé de manière à permettre la mise en mouvement et l'arrêt des différents organes mobiles constitutifs de la machine.

Selon l'invention, cette machine est caractérisée en ce qu'elle comporte, en outre :
- un équipement de métrologie destiné à mesurer la pièce,
- un dispositif de nettoyage comportant une chambre et agencé de manière à permettre l'engagement, dans cette chambre, de la pièce portée par son support, et
- des moyens de guidage, de positionnement et de déplacement, disposés sur le châssis et coopérant avec le dispositif de commande pour assurer un déplacement relatif du support en référence à la meule, à l'équipement de métrologie et au dispositif de nettoyage.

De la sorte, après que la pièce a été rectifiée, le dispositif de commande l'amène en regard du dispositif de nettoyage et l'engage dans la chambre dans laquelle elle est nettoyée et séchée, puis au voisinage de l'équipement de métrologie qui contrôle les dimensions obtenues.

Ce type de machines est particulièrement bien adapté pour rectifier des pièces présentant une certaine symétrie axiale, telles que des fraises. A cet effet, le support est formé d'une poupée comportant des moyens de fixation destinés à porter la pièce à rectifier, et des moyens d'entraînement pour faire tourner la pièce autour d'un deuxième axe de rotation.

Pour garantir les meilleures conditions de positionnement et de réglage de la poupée, les moyens de guidage, de positionnement et de déplacement, comprennent des moyens de mobilisation de la poupée sur le châssis qui comportent une base, fixée rigidement au châssis, un plateau monté mobile selon un premier axe de translation sur la base, au moyen d'un premier ensemble coulisse-coulisseau, une table montée pivotante sur le plateau autour d'un premier axe de pivotement, au moyen d'un organe de pivotement, une tête munie de moyens de fixation de la pièce à rectifier et montée mobile sur la table selon un deuxième axe de translation, au moyen d'un deuxième ensemble coulisse-coulisseau.

Afin de pouvoir fabriquer la pièce à partir d'une ébauche, sans devoir changer d'outil le groupe d'usinage comprend une deuxième tête comportant un dispositif de serrage destiné à porter une meule, et un dispositif d'entraînement destiné à faire tourner la meule autour d'un troisième axe de rotation, pour assurer une ébauche de la pièce, avant que le premier groupe effectue la rectification.

Du fait que le groupe d'usinage est monté pivotant sur le châssis autour d'un deuxième axe de pivotement parallèle au premier axe de pivotement, le passage de l'une à l'autre des têtes peut se faire de manière simple, précise et efficace. Avantageusement, les premier et troisième axes de rotation sont perpendiculaires l'un à l'autre.

Le guidage et le positionnement du groupe d'usinage est particulièrement efficace grâce au fait que les moyens de guidage, de positionnement et de déplacement comportent un rail en arc de cercle dont le centre est confondu avec son axe de pivotement et des patins coulissant sur le rail et solidaire les uns du châssis, les autres du groupe d'usinage, agencés de manière à supporter avec précision ce dernier dans sa périphérie.

La chambre que comporte le dispositif de nettoyage est munie d'une fenêtre agencée de manière à ce que la pièce puisse y être engagée, et au moins un volet coopérant avec l'organe de support de la pièce pour obturer la fenêtre.

Afin d'éviter un travail à haute température, comme le nécessitent les produits de nettoyage aqueux, le liquide de nettoyage utilisé dans ledit dispositif est de type solvant.

L'équipement de métrologie comporte un appareil de mesure et une enceinte, dans laquelle est disposé l'appareil de mesure pour le protéger, munie d'une fenêtre permettant d'y engager la pièce.

La machine selon l'invention comporte avantageusement un carénage définissant un espace confiné dans lequel se trouve le groupe d'usinage et le support, et un équipement agencé pour définir une pression différentielle entre la chambre, l'enceinte et l'espace confiné, la pression la plus haute étant dans l'enceinte, la plus basse dans la chambre. De la sorte, on évite toute pollution de l'appareil de mesure par le liquide de refroidissement utilisé pour effectuer la rectification des pièces, et de l'espace confiné et de l'enceinte par le liquide de nettoyage.

D'autres avantages et caractéristiques de l'invention ressortiront de la description qui va suivre, faite en regard du dessin annexé, dans lequel:
- La figure 1 montre, en perspective, une machine selon l'invention ;
- Les figures 2 à 6 représentent, vue de dessus, la machine de la figure 1, dans différentes positions de travail ;
- Les figures 7 à 9 illustrent une partie de la machine représentée aux figures 1 à 6, et plus particulièrement un dispositif de nettoyage qu'elle comporte ; et
- La figure 10 est une vue de dessus d'une variante de la machine selon l'invention.

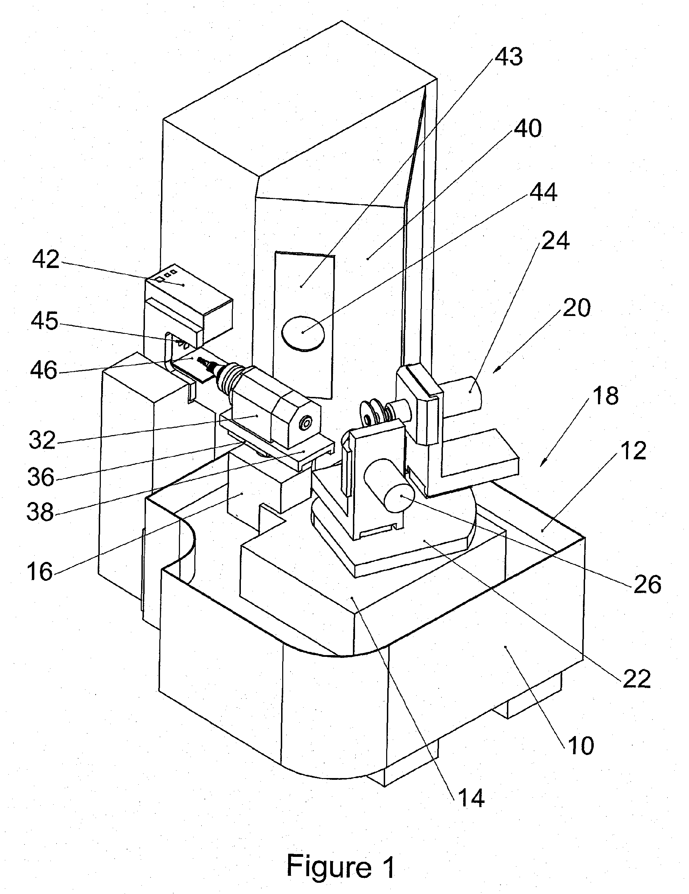

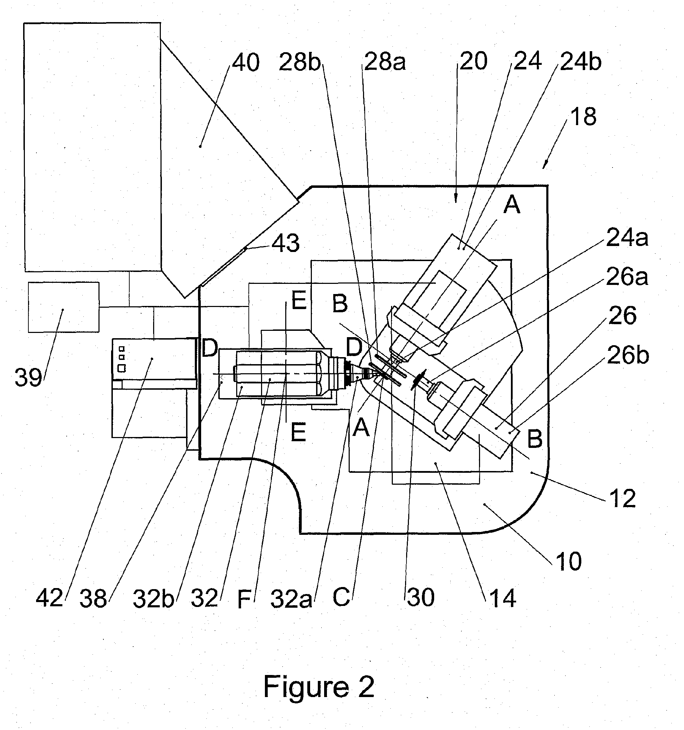

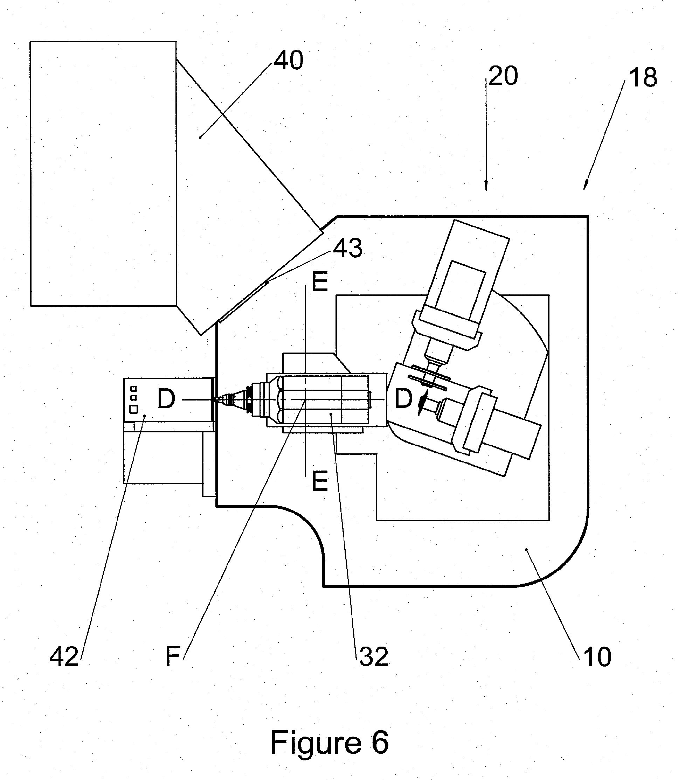

La machine selon l'invention, représentée en perspective sur la figure 1 et vue de dessus sur les figures 2 à 6 est destinée à tailler et à rectifier des fraises. Elle comporte, comme on peut le voir tout particulièrement sur les figures 1 et 2, un socle 10 en fonte lestée d'un mélange de béton-polymère qui résiste bien aux vibrations et qui est stable thermiquement. Sa face supérieure comprend une zone centrale entourée d'une rigole 12 destinée à permettre la circulation d'un liquide de lubrification et de refroidissement.

La zone centrale du socle 10 porte une table 14 réalisée en fonte. Un pilier 16, adjacent à la table 14, est également monté sur le socle 10.

Le socle 10, la table 14 et le pilier 16 forment ensemble un châssis 18 servant de support aux différentes parties fonctionnelles de la machine.

La table 14 porte un groupe d'usinage 20 comprenant un plateau 22 sur lequel sont montées deux têtes tournantes 24 et 26, respectivement autour d'axes A-A et B-B qui sont perpendiculaires entre eux, et munies chacune d'un organe de serrage identifié par la lettre a et d'un organe d'entraînement schématiquement représenté en b. Ces organes peuvent être constitués par des électrobroches telles que celles fabriquées par les maisons Renaud (Suisse) ou SMP2 (France).

Les organes de serrage 24a et 26a portent respectivement une meule de taillage 28 comportant deux disques 28a et 28b, et une meule de profilage 30.

Le plateau 22 est monté pivotant sur la table 14, autour d'un axe de pivotement C-C identifié par la lettre C, perpendiculaire au plan de la table 14 et aux axes A-A et B-B. Il est relié aux têtes 24 et 26 par des ensembles coulisse-coulisseau, non visibles au dessin, qui permettent des mouvements de translation selon des axes respectivement parallèles à A-A et B-B. Cette structure permet d'amener successivement les meules 28 et 30 au contact de la fraise à tailler, comme cela sera expliqué plus loin.

Le pilier 16 porte une poupée 32 comportant un organe de serrage 32a, par exemple un tasseau à corps ISO 50, dans lequel est engagée l'ébauche d'une fraise 34 destinée à être taillée et profilée, et un organe d'entraînement 32b agencé pour faire tourner l'organe de serrage 32a et, avec lui, la fraise 34 autour d'un axe D-D parallèle au plan des figures 2 à 6.

La poupée 32 est montée sur le pilier 16 par l'intermédiaire d'une table 36 (figure 1) coulissante selon un axe E-E parallèle au plan des figures 2 à 6, et qui est perpendiculaire à l'axe D-D lorsque la poupée 32 est en position de travail avec le groupe d'usinage 20. La table 36 porte un plateau 38 tournant autour d'un axe F-F perpendiculaire au plan du dessin et identifié par la lettre F. Ce plateau 38 porte la poupée 32, avec interposition d'un ensemble coulisse-coulisseau permettant un déplacement de la poupée selon un axe parallèle à l'axe D-D.

Les ensembles coulisse-coulisseau assurant le guidage durant les mouvements de translation sont avantageusement équipés de rails et patins à recirculation de rouleaux du type commercialisé par la maison INA (Allemagne). Ces mouvements sont engendrés par des moteurs numériques avec codeur à haute résolution, entraînant une vis à billes à quatre points de contact, comme celles produites par la maison Steinmeyer (Allemagne) par l'intermédiaire ou non d'une réduction à courroie crantée. Le contrôle des déplacements se fait par une règle incrémentale Heidenhain (Allemagne) de haute précision et pressurisée.

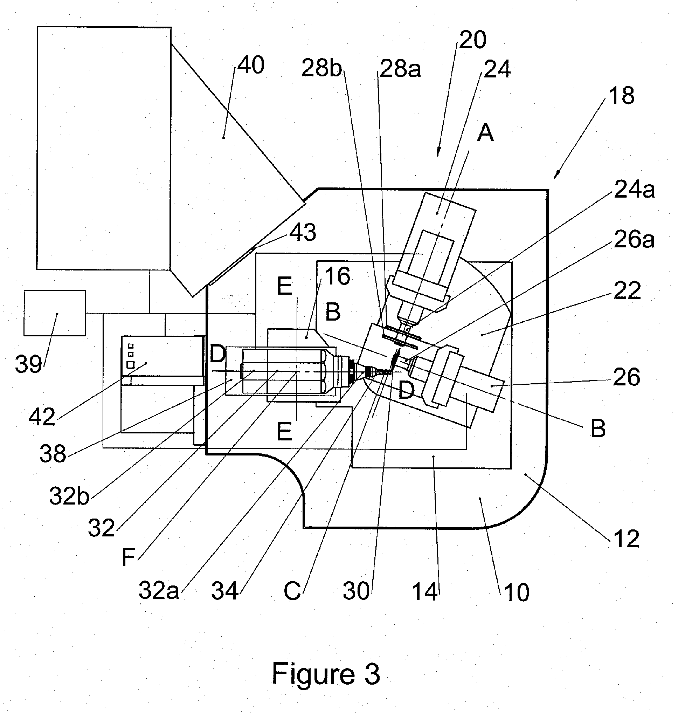

Les différents mouvements de rotation et de translation décrits ci-dessus sont assurés par des organes moteurs, bien connus de l'homme du métier, qui n'ont pas été représentés pour éviter de surcharger le dessin. Leurs mouvements sont définis par un dispositif de commande 39, schématiquement représenté sur les figures 2 et 3, tel qu'utilisé dans les machines à commande numérique, qui comprend un ordinateur dans lequel est enregistré un programme établi pour définir les différents déplacements à effectuer, par exemple une commande de type NUM 1050, munie d'un logiciel spécialisé du type NUM Rotoplus.

La partie de la machine qui vient d'être décrite permet d'assurer la fonction essentielle, soit le taillage de la fraise, qui consiste à former une ébauche de l'outil à fabriquer, puis à le profiler pour lui donner sa forme définitive. Il est possible de réaliser aussi bien des fraises de type disque que de type barreau, notamment à bout hémisphérique.

Dans tous les cas, la première opération consiste à tailler les gorges de dégagement au moyen de la meule de taillage 28, le disque 28a assurant l'ébauche, le disque 28b la finition. Ces disques sont montés en enfilade sur un tasseau. Les gorges peuvent être aussi bien droite qu'en hélice, à gauche ou à droite.

Le profilage se fait au moyen de la meule 30, par balayage, par balayage avec battement ou par détalonnage logarithmique. La référence pour la réalisation des profils est définie en alignant le bord radial de la meule 30 sur l'axe C-C de pivotement du plateau 22. Cela peut être fait en déplaçant la poupée 32 selon l'axe E-E. La vérification du centrage de la meule 30 est effectué en mesurant l'attaque d'une plaquette témoin remplaçant la fraise 34 sur la poupée 32.

Du fait que le groupe d'usinage comporte deux têtes indépendantes, il n'est pas nécessaire de changer de meule en cours de travail. De plus, les moyens d'entraînement peuvent être adaptés à la puissance qu'ils doivent dispenser, pour une application particulière.

Durant les opérations de taillage et de profilage, les meules 28 et 30 et la fraise 34 sont arrosées au moyen d'huile pleine arrivant à fort débit. L'huile est récupérée par la rigole 12 et conduite vers une installation de recyclage qui n'a pas été représentée et dans laquelle l'huile est réfrigérée et purifiée par centrifugation.

Les autres parties de la machine permettent une mesure in situ de la fraise 34. Il s'agit plus particulièrement d'un dispositif de nettoyage 40 et d'un équipement de métrologie 42, qui sont fixés et/ou attenants au socle 10.

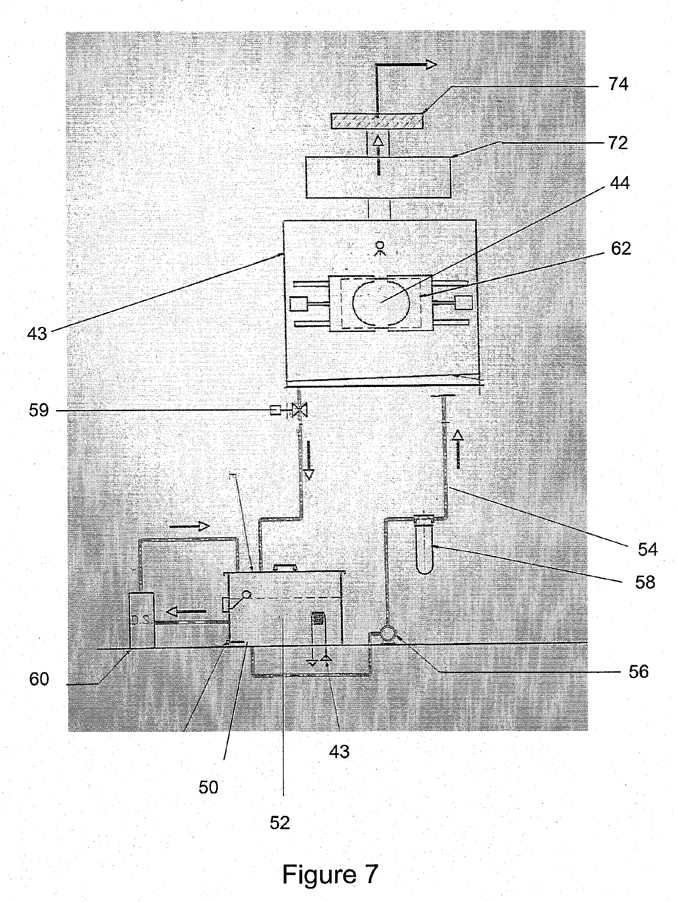

Le dispositif de nettoyage 40 sera décrit de manière plus détaillée en référence aux figures 7 à 9. Il est disposé au voisinage immédiat du socle 10 et comporte une chambre 43 et une fenêtre 44 débouchant dans la chambre 43 et permettant d'y introduire la fraise 34.

La fenêtre 44 est disposée de manière à ce que la fraise 34 puisse être introduite dans la chambre 43 par des mouvements de la poupée 32, de rotation autour de l'axe F-F et de translation selon l'axe D-D. En outre, la chambre 43 est mobile en translation, de manière à ce qu'elle puisse être avancée en direction de la poupée 32.

L'équipement de métrologie 42 comprend un appareil de mesure optique 45, par exemple du type à 2 caméras CCD à haute résolution, commercialisé par la maison Tecnogamma (Italie) sous la référence 14. Il comprend en outre, une cavité de mesure définie par une enceinte 46, partiellement enlevée sur les figures et dans laquelle règne une surpression garantissant qu'aucune particule d'abrasif, de lubrifiant ou de produit de nettoyage n'y pénètre.

L'appareil de mesure 45 est disposé de manière à ce qu'après avoir retiré la poupée 32 de la chambre 43 du dispositif de nettoyage 40, l'avoir fait pivoter autour de l'axe F-F, puis translater sur l'axe D-D, la fraise 34 puisse s'engager dans la cavité que définit l'enceinte 46, pour y effectuer une mesure.

Le dispositif de commande 39 comporte un second ordinateur qui recueille les informations obtenues grâce à l'appareil de mesure 45. Ces informations sont comparées avec les limites définies initialement.

Pour bien comprendre le fonctionnement général de la machine qui vient d'être décrite, on se référera aux figures 2 à 6 qui représentent la machine dans ses différentes positions de travail.

La première opération consiste à fixer une ébauche de fraise 34 dans l'organe de serrage 32a de la poupée 32. Cette opération peut se faire soit manuellement, soit au moyen d'un automate ou d'un robot programmé à cet effet.

L'ébauche est ensuite taillée dans la position illustrée sur la figure 2. La poupée 32 et le plateau 22 sont placés de manière à ce que la meule 28 coopère avec la fraise 34 pour la tailler. Lorsque cette opération est terminée, la tête 24 portant la meule 28 est déplacée selon l'axe A-A. Le plateau 22 tourne autour de l'axe C-C, puis la tête 26 est translatée selon l'axe B-B de manière à amener la meule 30 au voisinage de la fraise 34, comme indiqué sur la figure 3. La fraise 34 est alors profilée, c'est à dire que la forme des dents de la fraise est rectifiée. La commande de la poupée 32, du plateau 22 et des têtes 24 et 26 se fait par le programme enregistré dans le dispositif de commande 39.

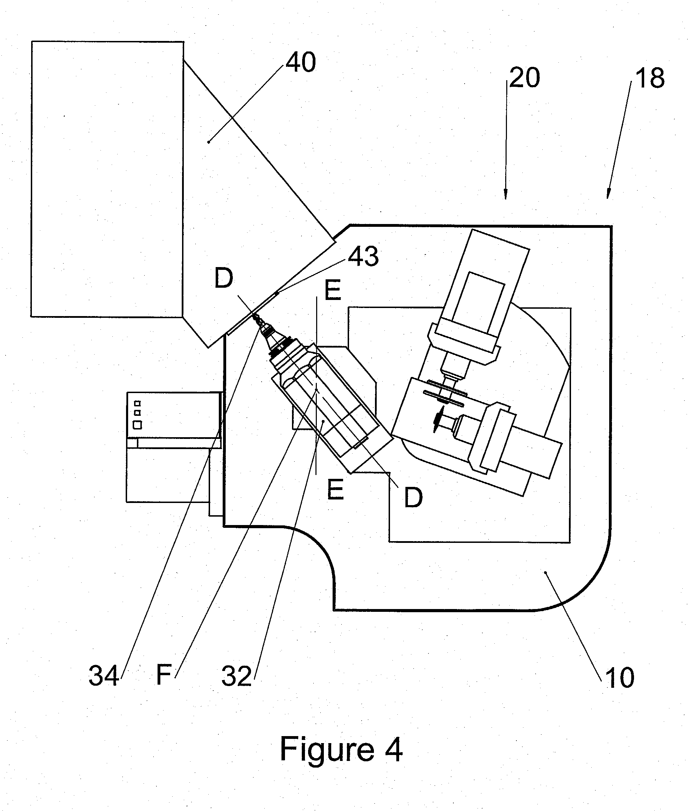

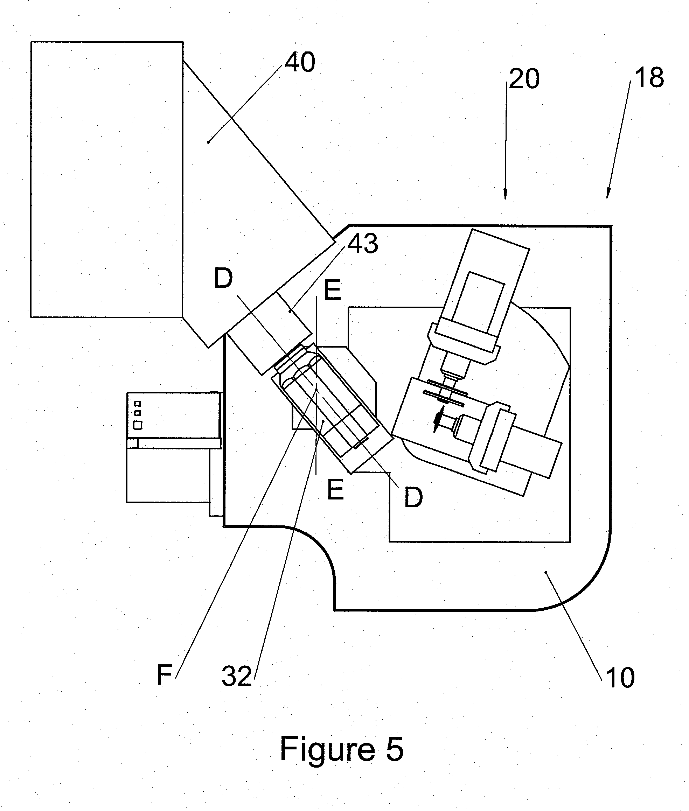

Après que la fraise 34 a été profilée et la meule 30 retirée par translation de la tête 26, la poupée 32 tourne autour de son axe F-F, jusqu'à amener la fraise 34 en regard de la fenêtre 44, puis translate selon l'axe D-D (figure 4). La chambre 43 est aussi déplacée (figure 5), de telle sorte que la fraise 34 y pénètre pour y être nettoyée selon un processus qui sera précisé en référence aux figures 7 à 9.

La fraise 34 étant nettoyée, elle est retirée de la chambre 43, par des mouvements en sens inverse de la chambre 43 et de la poupée 32. Cette dernière pivote ensuite autour de l'axe F-F de manière à ce que la fraise 34 se trouve en regard de l'équipement de métrologie 42. Une nouvelle translation selon l'axe D-D amène la fraise 34 dans la cavité de l'enceinte 46, de telle sorte que l'appareil de mesure 45 puisse effectuer les mesures, par exemple par diascopie ou épiscopie.

Les informations saisies par les caméras de l'appareil 45 sont traitées par le dispositif de commande 39 qui détermine si la forme de la fraise 34 est comprise dans les tolérances ou si elle doit être corrigée. Dans le premier cas, elle est retirée de l'organe de serrage 32a. Dans le cas contraire, la poupée 32 est ramenée par rotation et translation dans la position illustrée à la figure 3, pour une retouche au moyen de la meule 30, commandée par le dispositif 39. Cette retouche s'effectue selon un même cycle que décrit ci-dessus. Dès que les tolérances sont atteintes, la pièce peut être retirée. De manière avantageuse, le dispositif de commande délivre un protocole de contrôle établissant la conformité de la fraise aux exigences définies.

Ainsi, la fraise 34 n'a pas besoin d'être retirée de l'organe de serrage 32a pour pouvoir la contrôler. Il est donc possible de garantir de bien meilleures conditions de travail, permettant d'éviter un réétalonnage après l'enlèvement puis la mise en place de la fraise 34.

Pour que la mesure puisse se faire dans de bonnes conditions, il est nécessaire que la pièce à mesurer soit d'une propreté parfaite, mais que, de plus, elle présente une température très voisine de la température ambiante. Certaines précautions doivent donc être prises à cet effet au niveau du dispositif de nettoyage.

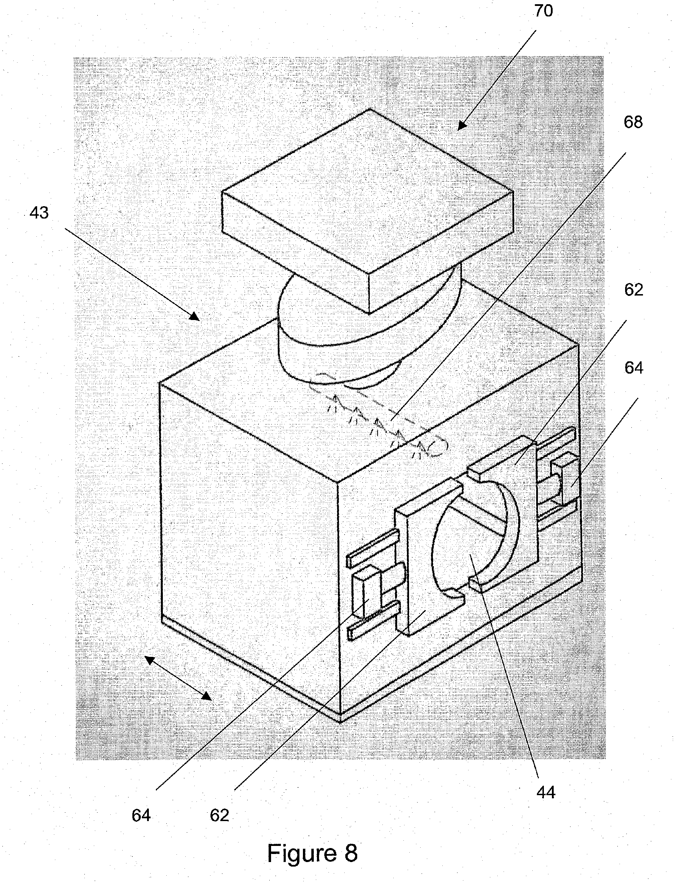

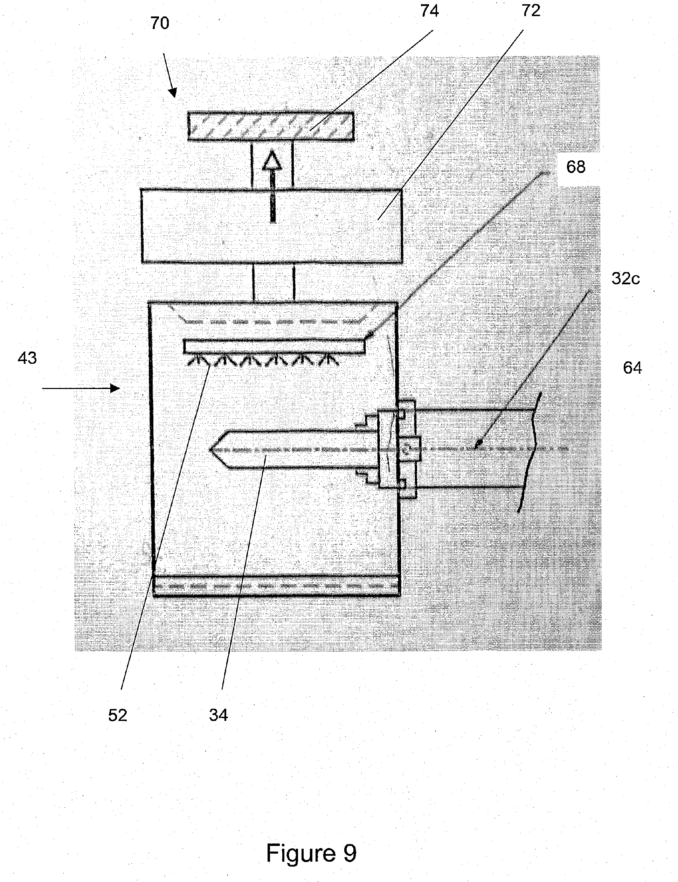

Ce dernier est représenté schématiquement sur la figure 7, alors que les figures 8 et 9 montrent la chambre 43, respectivement en coupe et en perspective.

Le dispositif de nettoyage 40 comporte, en plus de la chambre 43, un bac de rétention 50 dans lequel est stocké le solvant de nettoyage dont le niveau est représenté par un traitillé et qui porte la référence 52. Un serpentin 53, relié à une installation thermique non représenté au dessin, assure le maintien du solvant 52 à une température stable, qui garantit qu'à la sortie de la chambre 43, la pièce aura la température idoine.

Une tuyauterie 54 permet le passage du solvant 52 entre le bac 50 et la chambre 43, la circulation étant assurée par une pompe 56 qui aspire le solvant 52 dans le bac 50 et l'envoie sous pression vers la chambre 43. De manière avantageuse, un filtre 58 est branché sur la tuyauterie 54, éliminant les particules en suspension. Une vanne 59 commande la circulation du solvant 52 dans la tuyauterie 54.

Afin de garantir à long terme la qualité du solvant, un distillateur 60 peut avantageusement être relié au bac pour assurer la régénération du solvant 52.

Comme on peut le voir sur la figure 8, la chambre 43 est percée par la fenêtre 44 dont le pourtour est défini par deux volets 62 montés coulissant sur les parois de la chambre 43. Des moyens de commande, schématiquement représentés en 64 sont reliés au dispositif de commande 39 et assurent le coulissement des volets 62 pour ouvrir et fermer la fenêtre 44.

Une rampe de buses 68, reliée à la tuyauterie 54, est fixée sur la paroi intérieure de la chambre 43. Cette dernière porte, en outre, un système d'aspiration 70 qui assure une dépression à l'intérieur de la chambre 43. Il comporte un aspirateur 72 à moteur anti-déflagration, et un filtre 74 à charbon actif, ce qui permet d'éviter l'émission de solvant en dehors de la chambre 43.

Sur ces figures, les moyens permettant d'assurer le coulissement de la chambre 43, illustré par une double flèche sur la figure 8, n'ont pas été représentés, leur réalisation étant facilement accessible à l'homme du métier.

La figure 9 montre, vue en coupe, la chambre 43 à l'intérieur de laquelle se trouve la fraise 34, fixée sur la poupée 32 et plus particulièrement son organe de serrage 32a. Ce dernier comporte un mandrin 32c qui s'étend jusqu'au niveau des volets 62.

Après que la fraise 34 ait été introduite dans la chambre 43, les volets 62 sont appliqués contre le mandrin 32c, de manière à rendre la chambre 43 pratiquement étanche. La pompe 56 est ensuite mise en action et le solvant 52 est projeté sur la fraise 34 au travers des buses de la rampe 68. Durant cette opération, la chambre 43 est en sous-pression de manière à éviter que du solvant 52, sous forme liquide ou gazeuse, ne sorte. De plus, le mandrin 32c tourne lentement, de manière à ce que le solvant soit projeté régulièrement sur toute la surface de la fraise 34. Afin de réduire le temps de nettoyage, il est possible de disposer plusieurs rampes à l'intérieur de la chambre 43.

Après que la projection de solvant 52 a été arrêtée, la fraise 34 reste encore un moment à l'intérieur de la chambre 43, de manière à ce que la fraise 34 soit sèche. Le temps de séchage dépend de la structure de la fraise 34 et du solvant utilisé. Il peut être défini empiriquement.

Les volets 62 sont ensuite ouverts pour que la chambre 43 d'une part, la poupée 32 d'autre part coulissent et s'éloignent l'une de l'autre. Lorsque la fraise 34 est complètement sortie de la chambre 43, la poupée 32 peut alors pivoter autour de son axe F-F, pour amener la fraise 34 en regard de l'équipement de métrologie 42.

Dans les cas où la température est susceptible de jouer un rôle important, un jet d'air à température régulée peut être projeté sur la fraise après qu'elle a été sortie de la chambre 43 et jusque durant l'opération de mesure.

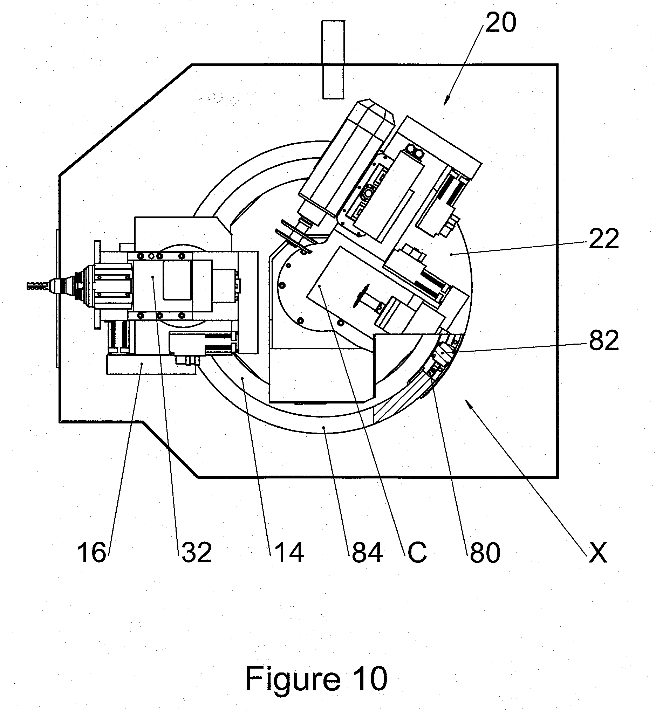

Dans le mode de réalisation illustré à la figure 10, les pièces ayant les mêmes fonctions que celles représentées aux figures 2 à 6 portent les mêmes références. Sur cette figure, le dispositif de nettoyage et l'équipement de métrologie n'ont pas été représentés du fait qu'ils sont en tout point similaires et occupent les mêmes places que ceux du mode de réalisation des figures 1 à 6.

Ce mode de réalisation diffère essentiellement de celui décrit précédemment par la structure de la table 14, du groupe d'usinage 20 et de son plateau 22. Sur cette figure et dans sa portion identifiée par X, les éléments supérieurs de la machine ont été arrachés, de manière à rendre visible les pièces cachées essentielles. Plus précisément, le plateau 22 est monté pivotant sur la table 14 au moyen d'un rail 80 en arc de cercle concentrique à l'axe C-C et de patins 82 coopérant avec le rail pour soutenir et guider le plateau 22 dans sa périphérie.

Les patins 82, portés par le plateau 22 sont de type à recirculation de billes. Une protection 84, solidaire du plateau 22, recouvre le rail 80 et passe dans un dégagement que comporte le pilier 16. Ce dernier forme donc un pont au-dessus du rail 80 et de la protection 84. Grâce à la protection 84, le rail et les patins sont protégés du lubrifiant et des particules d'abrasif. Avec à cette structure particulière, la table 14 peut supporter des charges importantes tout en conservant sa grande précision.

Il est bien évident que la machine qui vient d'être décrite, qu'il s'agisse du premier ou du deuxième mode de réalisation, est munie d'un carénage, non représenté au dessin, qui confine son espace d'usinage. Le dispositif de nettoyage et l'équipement de métrologie sont placés en dehors de cet espace.

Le carénage est muni d'ouvertures disposées en regard du dispositif de nettoyage et de l'équipement de métrologie pour en permettre l'accès à la fraise 34. Des volets amovibles ferment ces ouvertures en dehors de moments où l'accès doit être rendu possible à la chambre et à l'enceinte dans lesquelles s'effectuent respectivement le nettoyage et la mesure.

L'espace confiné défini par le carénage est en dépression par rapport à l'enceinte de l'équipement de métrologie et en surpression par rapport à la chambre de nettoyage. De la sorte, on évite toute pollution, spécialement au niveau de l'enceinte de mesure, mais également au niveau de l'espace confiné.

Le carénage comprend, bien entendu des parties amovibles qui permettent l'accès à l'espace confiné, pour permettre le réglage et le nettoyage de la machine.

Dans les deux modes de réalisation décrits ci-dessus, la machine est destinée à fabriquer des fraises de précision, par des opérations d'ébauchage, finition, puis profilage, ce qui équivaut à une opération de rectification. Le même concept est applicable à d'autres opérations ayant le même but, soit usiner une pièce avec grande précision, par rectification. La pièce à usiner peut ou non être fixe.

## Revendications

1. Machine à rectifier comportant un dispositif de commande (39), un châssis (18) et, montés sur ce châssis, des organes comprenant :
- un support muni de moyens de fixation destinés à porter une pièce à rectifier (34), et
- un groupe d'usinage (20) comprenant une tête (26), un organe de serrage (26a) monté sur la tête et destiné à porter une meule (30), et un dispositif d'entraînement (26b) destiné à faire tourner la meule autour d'un premier axe de rotation (B-B), pour assurer la rectification de la pièce (34),
dans laquelle le dispositif de commande (39) est agencé de manière à permettre la mise en mouvement et l'arrêt des différents organes constitutifs de la machine,
**caractérisée en ce qu'**elle comprend, en outre :
- un équipement de métrologie (42) destiné à mesurer la pièce (34),
- un dispositif de nettoyage (40) comportant une chambre (43) et agencé de manière à permettre l'engagement, dans cette chambre, de la pièce (34) portée par son support, et
- des moyens de guidage, de positionnement et de déplacement, disposés sur le châssis (18) et coopérant avec le dispositif de commande (39) pour assurer un déplacement relatif du support en référence à la meule (30), à l'équipement de métrologie (42) et au dispositif de nettoyage (40).

2. Machine selon la revendication 1, **caractérisée en ce que** ledit support est formé d'une poupée (32) comportant des moyens de fixation (32a) destinés à porter ladite pièce (34), et des moyens d'entraînement (32b) pour faire tourner la pièce autour d'un deuxième axe de rotation (D-D).

3. Machine selon la revendication 2, **caractérisée en ce que** les moyens de guidage, de positionnement et de déplacement, comprennent des moyens de mobilisation de la poupée (32), sur le châssis (18), qui comportent une base (16), partie du châssis (18), un plateau (38) monté mobile selon un premier axe (E-E) de translation sur la base (16), au moyen d'un premier ensemble coulisse-coulisseau, une table (36) montée pivotante sur le plateau (38) autour d'un premier axe de pivotement (F-F), au moyen d'un organe de pivotement, et **en ce que** ladite poupée (32) est montée mobile sur ladite table selon un deuxième axe de translation parallèle au deuxième axe de rotation (D-D), au moyen d'un deuxième ensemble coulisse-coulisseau.

4. Machine selon la revendication 2, **caractérisée en ce que** le groupe d'usinage (20) comprend une deuxième tête (24) comportant un dispositif de serrage (24a) destiné à porter une meule (28), et un dispositif d'entraînement (24b) destiné à faire tourner la meule (28) autour d'un troisième axe de rotation (A-A), pour assurer une ébauche de la pièce (34), avant que la première tête (26) effectue la rectification.

5. Machine selon la revendication 4, **caractérisée en ce que** ledit groupe d'usinage (20) est monté pivotant sur le châssis autour d'un deuxième axe de pivotement (C-C) parallèle au premier axe de pivotement (F-F).

6. Machine selon la revendication 5, **caractérisée en ce que** lesdits premier (B-B) et troisième (A-A) axes de rotation sont perpendiculaires l'un à l'autre.

7. Machine selon la revendication 6, **caractérisée en ce que** les moyens de guidage, de positionnement et de déplacement comportent un rail (80) en arc de cercle dont le centre est confondu avec son axe de pivotement (C-C) et des patins (82) coulissant sur le rail (80) et solidaires les uns du châssis, les autres du groupe d'usinage, agencés de manière à supporter de manière particulièrement précise ce dernier dans sa périphérie.

8. Machine selon la revendication 1, **caractérisée en ce que** ladite chambre (43) est munie d'une fenêtre (44) agencée de manière à ce que la pièce (34) puisse y être engagée, et au moins un volet (62) coopérant avec l'organe de support de la pièce (32a) pour obturer la fenêtre(44).

9. Machine selon la revendication 1, **caractérisé en ce que** ledit dispositif le liquide de nettoyage (52) utilisé dans est de type solvant.

10. Machine selon la revendication 1, **caractérisé en ce que** l'équipement de métrologie (42) comporte un appareil de mesure (45), une enceinte (46), dans laquelle est disposé l'appareil de mesure, munie d'une ouverture permettant d'y engager la pièce (34).

11. Machine selon les revendications 9 et 10, **caractérisée en ce qu'**elle comporte, en outre, un carénage définissant un espace confiné dans lequel se trouve le groupe d'usinage (20) et le support, et un équipement agencé pour définir une pression différentielle entre ledit espace, l'enceinte (46) et la chambre (43), la pression la plus haute étant dans ladite enceinte (46), la plus basse dans ladite chambre (43).
